# EUROPEAN PATENT APPLICATION

(11) **EP 4 331 712 A1**
(43) Date of publication of application: **06.03.2024**
(21) Application number: 22193267.6
(22) Date of filing: 31.08.2022
(51) Int. Cl.: B01D 67/00, B01D 71/48, B65D 51/16

(54) **GAS-TIGHT TRACK-ETCHED MEMBRANES FOR EMERGENCY VENTING**

(71) Applicant: Oxyphen GmbH, 79807 Lottstetten (DE)
(72) Inventor: Alfimov, Vassili, 79807 Lottstetten (DE); Sproll, Stefan, 8620 Wetzikon (CH); Martin, Franz, 8620 Wetzikon (CH)
(74) Representative: Weickmann & Weickmann PartmbB

(57) **Abstract**

A gas-tight membrane of the present invention comprises a basic membrane having indentations on one or both sides of the membrane, which indentations are partially developed pores obtained by an incomplete track-etch treatment applied to the basic membrane.

A method for producing an inventive gas-tight membrane uses an incomplete track-etch treatment applied to a basic membrane, in which the incomplete track-etch treatment comprises the steps including an irradiation treatment by heavy ions, optionally a subsequent UV activation, and an etching treatment step, wherein the treatment results in formation of indentations on one or both sides of the membrane, one or more of the said steps, however, are performed under conditions preventing the pores to completely penetrate the thickness of the membrane.

The inventive membrane is useful as a burst membrane, especially for emergency venting in connection with batteries, e.g. for cars, e-bikes, handheld devices, energy storing devices or heavy-duty tools.

## Description

The present invention relates to a gas-tight membrane comprising a basic membrane having indentations on one or both sides of the membrane, a method for producing the gas-tight membranes of the present invention as well as their use as burst membranes in various application forms.

### Background of the Invention

Production of "classical" track-etched membranes (TEM) comprises high energetic heavy ion irradiation of polymer foils with subsequent activation of latent tracks, for example, by UV light, as well as an etching treatment performed afterwards. The production of TEM which are currently commercially available in significant volumes is focused on delivering go-through pores that penetrate through the complete thickness of a membrane and which pores have the highest possible homogeneity of pore sizes and pore densities throughout hundreds of square meters of membrane. Exemplary methods for producing track-etched membranes are described in the publications listed below or, in patent documents like US 3 612 871 B2, DD-AP 235923 and DE 195 36 033 A1.

It was long known that, if some production requirements for the commonly used TEM are not fully followed, the produced TEM could have pores that are not fully developed or which are non-homogeneously distributed. Such waste by-products of the typical TEM production were not considered as commercially attractive before and have not been optimized for commercialization.

### Summary of the Invention

The present invention aims at providing gas-tight track-etched membranes, which are useful as burst membranes in a number of applications. Thus, in a first aspect, the present invention relates to a gas-tight membrane comprising a basic membrane having indentations on one or both sides of the membrane, which indentations are partially developed pores obtained by an incomplete track-etch treatment applied to the basic membrane.

In a second aspect, the present invention relates to a method for producing the inventive gas-tight membrane by an incomplete track-etching treatment applied to a basic membrane, in which the incomplete track-etching treatment comprises steps including an irradiation treatment by heavy ions, optionally a subsequent UV activation, and an etching step, wherein the treatment results in formation of indentations on one or both sides of the membrane, one or more of the steps, however, is performed under conditions preventing the pores from completely penetrating the membrane.

A third aspect of the present invention relates to the use of an inventive gas-tight membrane or membrane produced according to the inventive method mentioned above as a burst membrane, especially for emergency venting, preferably in connection with batteries, e.g., for cars, e-bikes, handheld devices, energy storing devices or heavy-duty tools.

### Detailed Description

The invention presented here describes a novel kind of gas-tight track-etched membranes (GT TEM) that was not available before. Through certain targeted manipulations of production parameters, a range of GT TEMs could be produced which contain partially developed pores that do not go through the complete thickness of the membrane. The manipulation of the production parameters sets certain penetration depths of the partially developed pores and, what is more crucial for the intended application for emergency renting, a certain thickness of the pore-free "bridge" between two sides of partially developed pores or one side of partially developed pores and one side without pores. The thickness of the "bridge" but also the shape and density of pores provided on the membrane correlates to the force that is necessary to burst the membrane.

The inventive gas-tight membranes can have partially developed pores on one side as exemplified in Figure 1. Alternatively, the membranes can have partially developed pores on both sides of the membrane as exemplified by Figure 2. Figure 2 shows a symmetrical orientation of the pores against each other and also a symmetrical orientation of the pore depths with relation to the remaining "bridge". However, further preferred embodiments of the present invention include asymmetrical orientations of the pore depths with regard to the "bridge" as exemplified by Figure 3 or against each other and optionally also against the "bridge" as exemplified by Figure 4. All conceivable sizes, depth and relative configurations of pores on one or both sides of the membrane are considered as within the scope of the present invention and the choice of the appropriate configuration can easily be made by the skilled person based on the intended use of the gas-tight membrane.

The pores of the gas-tight membrane of the present invention are preferably of conical or cylindrical shape. Furthermore, the pores on the different sides of the membrane can have the same or different penetration depth, again leading to a symmetrical or asymmetrical configuration in relation to the "bridge" as explained above.

The inventive gas-tight membrane can have a pore density and also pore sizes in the same range as usually applied for the "classical" track-etched membranes, however the difference is that, according to the invention, the pores do not fully penetrate the membrane, but only are present as indentation on one or both sides. In preferred embodiments, the gas-tight membrane shows 1,000 to 1 × 10¹⁰ partially developed pores per cm², preferably the gas-tight membrane has 1 × 10⁶ to 5 × 10⁸ of such indentations or partially developed pores per cm². Such number of partially developed pores can be present on one or both sides of the membrane and pore density can be the same for both sides of the membrane, or different.

Also in view of the pore size, the gas-tight membrane of the present invention closely resembles the known "classical" track-etched membranes and can have the same pore sizes on the surface, preferably pore sizes of 0.1 to 20 µm, preferably 1 to 10 µm, again the important difference being that for the inventive gas-tight membrane the pores do not fully penetrate the membrane. For cylindrical pore shapes, the pore size is consistent from the membrane surface to the bottom of the pore, whereas for conical pore shapes, the pore size on the surface has the largest diameter and tapers towards the bottom of the pore. Also the pore sizes can be the same of both sides of a membrane having indentations on both sides, or different.

For many applications of membranes, it is important that pores are distributed particularly evenly and, according to the present invention, preferred gas-tight membranes show a standard deviation of the distribution of partially developed pores per square unit of a maximum of 30 %, preferable of 1 to 10 % and most preferably between 2 and 5 %, considered independently for both sides of the membrane. Within the context of this invention, the square unit refers to any appropriate square size for which the standard deviation of the distribution of the pores is determined.

In a similar manner, the pore size is preferably also highly uniform and homogeneous over the membrane area and in especially preferred embodiments of the invention, the standard deviation of pore size varies between 3 % and 10 %. Especially, the homogeneity and uniformity of pore distribution and pore size can be an important factor for uses of the gas-tight membranes and especially for use as a burst membrane. Considering the preferred embodiments regarding these features, the invention allows to arrive at a deviation of a medium burst pressure applied to the membrane of equal to or below 50 %, preferably equal to or below 25 % and most preferably equal to or below 20 %, again, the property independently applies to each of both sides of the membrane.

Considering the various membrane configurations described above, it is evident that the inventive membrane can comprise partially developed pores on both sides of the membranes in a manner, which provides for different burst pressures for the different sides. This is especially the case if the pore depth on both sides is different, however, also the pore density on both sides as well as other factors influencing the burst pressure can vary. It can be highly advantageous to use such membrane configurations to achieve different burst pressure sensitivity depending on whether the pressure is applied from the one or the other side.

As with classical track-etched membranes, also the gas-tight membranes according to the present invention can be made of a membrane material selected from polyethylene terephthalate (PET), polycarbonate (PC), polyimide (PI), polyvinylidene fluoride (PVDF), polyethylene naphthalate (PEN), polyether ether ketone (PEEK), ethylene tetrafuoroethylene (ETFE) and other polymers or composite materials having similar properties. Based on the properties of PET and the fact that this material is environmentally friendly, however also based on its burst properties, PET is the most preferred membrane material of the present invention.

The membrane thickness can be adapted and chosen according to the intended use. Within the context of the present invention, usually membrane thicknesses are between 5 and 200 µm, a preferred membrane thickness, especially for burst membranes, is 10 to 75 µm.

Again, depending on the desired sensitivity of the membrane, the pore-free "bridge" of the membrane material usually constitutes between 10 and 50 % of the thickness of the basic membrane, however, depending on the intended application, also higher or lower values can apply.

It will be apparent to the skilled person that many of the above explanations regarding preferred embodiments apply to specific circumstances and especially the general use of the membrane as a burst membrane. For other possible uses but also for specific application as a burst membrane, adaptions and variations of such preferred embodiments might be required and advantageous. Such adaptions and variations can be easily made by the skilled person based on his knowledge and the overall information provided herewith.

Regarding the second aspect of the present invention, i.e., a method for producing the inventive gas-tight membrane, such method includes an incomplete track-etch treatment which is applied to a basic membrane. Such incomplete track-etch treatment includes the steps of an irradiation treatment by heavy ions. Optionally, subsequent UV activation can be performed as is state of the art to produce track-etched membranes. Furthermore, and a standard step in the production of the classic membranes with fully developed pores, an etching treatment step is carried out for removing the polymer material contained in the latent tracks formed by the heavy ion treatment and optional subsequent UV activation.

In principle, according to the present invention, each of the above-mentioned steps can be performed in a manner, which avoids complete penetration of the membrane material by the pores. For example, for an inventive membrane with one-sided indentations or pores, the energy of heavy ions can be chosen too low for a complete penetration through the polymer membrane material. Furthermore, the production process can be performed with or without subsequent UV activation. Omitting the UV activation step is also one of the possibilities to inhibit complete penetration of the membrane by pores. In the above cases, a complete penetration of the pores is avoided due to the low energy of the heavy ions, and/or due to the lack of UV activation or the insufficiency thereof. Also, the oxygen concentration during the UV activation treatment can be adjusted to avoid development of completely penetrating pores. Especially in case that irradiation by heavy ions is performed by applying an irradiation treatment with an energy, which allows for complete penetration through the polymer foil, lack of UV activation or insufficient UV activation can be applied to prevent complete pore development or an oxygen concentration can be adjusted to avoid development of completely penetrating pores.

Finally, also the etching step can be adapted in order to avoid complete pore development. E.g., the etching can be stopped before the pores go completely through the thickness of the membrane or a less strong etching solution can be applied.

Finally, it is also possible and a further preferred embodiment of the present invention to provide a gas-tight membrane with pores on only one side by applying a protective layer on one side of the polymer material and by etching on only one side of the polymer foil, again adjusting the etching or any of the other process steps in order to prevent complete penetration of the pores through the membrane material.

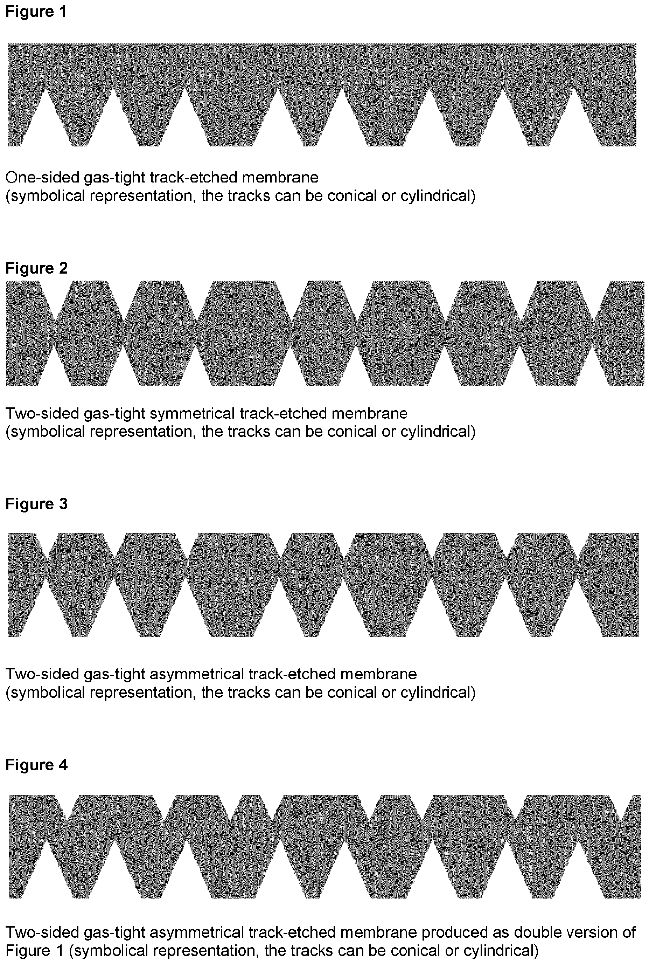

As a further example, a gas-tight membrane of the present invention having partially formed pores on both sides as, e.g., shown in Figure 2 can be produced if the energy of the heavy ions is high enough for complete penetration through the polymer material. The latent tracks are then left completely or partially undeveloped by applying too little or no UV activation and/or too little or no oxygen concentration and/or incomplete etching to both sides.

Depending on the conditions applied to each side of the membrane, a symmetrical or an asymmetrical membrane can be obtained. Asymmetry can also be added through a protective layer on one side or through application of different etching conditions to the two sides of a polymer foil. The etching is again stopped before the pores completely penetrate the thickness of the membrane.

As a further option, an asymmetrical version of gas-tight track-etched membrane could also be generated by the combination of irradiations with different ion species or energies of these ions on one side or on both sides to generate different latent tracks in the polymer foils (as in Figure 4). These tracks are then underdeveloped as described above and the etching is stopped before the pores go completely through the thickness of the membrane.

Based on the above examples, the skilled person will easily appreciate that adapting the conditions for producing classical track-etched membranes as outlined above, all sorts of different configurations and variations of gas-tight membranes of the present invention can be obtained. As applicable with regard to the description of the gas-tight membranes themselves, also for the inventive method for production, the features and conditions can easily be adapted to provide the best possible gas-tight membrane for the intended use.

A third aspect of the present invention relates to the uses of the inventive gas-tight membranes. According to the present invention, it is evident that a very important use of such membranes lies in their application as a burst membrane. Burst membranes are typically used in devices, in which malfunctions or external conditions can lead to increased pressure or other circumstances, which can damage the device or which can endanger surrounding objects or articles. A burst membrane can be used in safety engineering and in applications like pressure sensors, however also in explosion pressure absorption systems and the membranes can protect against fire and detonation.

Accordingly, preferred uses of the inventive gas-tight membranes include applications in emergency venting, especially in connection with batteries, e.g. for cars, e-bikes, hand-held devices, energy storing devices or heavy duty tools. Also other applications, in which overpressure can be prevented by the bursting of a respective material in a predefined fashion to enable a controlled deflation are potential uses of the inventive membranes, e.g., in automobile airbags.

The inventive membranes can be used for such application as described above with an external trigger like a needle, edge or similar as well as without an external trigger. In the latter case, the inventive membrane bursts based on its own perforation as the inventive membrane includes millions and millions of weak points which give way in response to the applied pressure.

### List of references:

Apel P. Yu. and Dmitriev S. N. (2011)
Micro- and nanoporous materials produced using accelerated heavy ion beams
2011 Adv. Nat. Sci: Nanosci. Nanotechnol. 2 (2011) 013002
   http://iopscience.iop.org/2043-6262/2/1/013002
Apel P. (2001), Track etching technique in membrane technology Radiation measurements 34, pp 559-566
Fischer B. E. and Spohr R. (1983) Production and use of nuclear tracks: imprinting structure on solids, Rev. Mod. Phys. 55 907
Spohr R. (1997) Ion track technology - a persisting challenge New Astronomy Reviews 42 (1998) 189-203
Apel P. Yu. (1995) Heavy particle tracks in polymers and polymeric track membranes, Radiation measurements 25, 1-4, pp 667-674 (1995)
Spohr R. (2001), Etch hints for polymers with high track-etch-rate European Research Training Network EuNITT, Report M2.1
DeSorbo W. (1979), Ultraviolet effects and aging effect on etching characteristics of fission tracks in polycarbonate film, Nucl. Tracks, Vol. 3, pp 13-32, 1979
Spohr R. (2009), Ion Tracks for micro and nanofabrication, Uppsala PhD Thesis 700, http://kth.diva-portal.org/smash/get/diva2:280068/FULLTEXT02.pdf

The following Examples and Figures further illustrate the invention:
Figure 1 shows a one-sided gas-tight track-etched membrane (symbolical representation, the tracks can be conical or cylindrical);
Figure 2 shows a two-sided gas-tight symmetrical track-etched membrane (symbolical representation, the tracks can be conical or cylindrical);
Figure 3 shows a two-sided gas-tight asymmetrical track-etched membrane (symbolical representation, the tracks can be conical or cylindrical);
Figure 4 shows a two-sided gas-tight asymmetrical track-etched membrane produced as double-version of Figure 1 (symbolical representation, the tracks can be conical or cylindrical); and

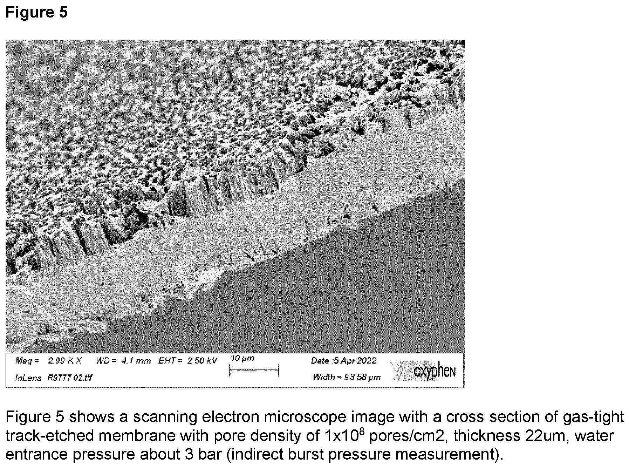

Figure 5 shows a scanning electron microscope image with a cross section of gas-tight track-etched membrane

### Example

A raw PET foil (23um thickness, Mitsubishi Hostaphan RN MED) was irradiated with heavy ions (Kr) at the accelerator. The UV activation of latent tracks was on purpose avoided. The irradiated foil was then etched, but the etching was stopped, before the etching fronts from both sides of the membrane met each other and the pores were developed into go-through pores. The control of the etching was done with airflow measurements and water entry pressure measurements. These and other applicable measurements can be used to control the production and grade the membrane for different burst pressures, depending on the configuration of test setup. Figure 5 shows a scanning electron microscope image with a cross section of gas-tight track-etched membrane with pore density of 1×10⁸ pores/cm2, thickness 22um, water entrance pressure about 3 bar (indirect burst pressure measurement).

## Claims

1. Gas-tight membrane comprising a basic membrane having indentations on one or both sides of the membrane, which indentations are partially developed pores obtained by an incomplete track-etch treatment applied to the basic membrane.

2. Gas-tight membrane according to claim 1, wherein partially developed pores are present on one side of the membrane only, or wherein partially developed pores are present on both sides of the membrane, the pores on both sides having a symmetrical or asymmetrical orientation against each other.

3. Gas-tight membrane according to any of the preceding claims, wherein the pores have a conical or cylindrical shape.

4. Gas-tight membrane according to any of the preceding claims, wherein the pores on different sides of the membrane have the same or different penetration depth.

5. Gas-tight membrane according to any of the preceding claims, having 1,000 to 1 × 10¹⁰ partially developed pores per cm², preferably 1 × 10⁶ to 5 × 10⁸ partially developed pores per cm² on one or both sides of the membrane and/or wherein the pore size is 0.1 to 20 µm, preferably 1 to 10 µm.

6. Gas-tight membrane according to any of the preceding claims, wherein the standard deviation of the distribution of partially developed pores per square unit is up to 30 %, preferably from 1 % to 10 % and typically between 2 % to 5 %.

7. Gas-tight membrane according to any of the preceding claims, wherein the standard deviation of pore size is between 3 % and 10 % and/or wherein the deviation of a median burst pressure is equal to or below 50%, preferably equal to or below 25% and most preferably equal to or below 20%.

8. Gas-tight membrane according to any of the preceding claims, wherein the membrane comprises partially developed pores on both sides of the membrane in a manner, which provides for different burst pressures for the different sides.

9. Gas-tight membrane according to any of the preceding claims, wherein the membrane material is selected from polyethylene terephthalate (PET), polycarbonate (PC), polyimide (PI), polyvinylidene fluoride (PVDF), polyethylene naphthalate (PEN), polyether ether ketone (PEEK), ethylene tetrafuoroethylene (ETFE) and other polymers or composite materials having similar properties, preferably PET.

10. Gas-tight membrane according to any of the preceding claims, wherein the membrane thickness lies between 5 and 200 µm, preferably 10 to 75 µm, and/or wherein a pore-free bridge of membrane material constitutes between 10 % and 50 % of the thickness of the basic membrane.

11. Method for producing a gas-tight membrane according to any of claims 1 to 10 by an incomplete track-etch treatment applied to a basic membrane, in which the incomplete track-etch treatment comprises the steps including an irradiation treatment by heavy ions, optionally a subsequent UV activation, and an etching treatment step, wherein the treatment results in formation of indentations on one or both sides of the membrane, one or more of the said steps, however, are performed under conditions preventing the pores to completely penetrate the thickness of the membrane.

12. Method according to claim 11, wherein the irradiation by heavy ions is performed by applying an irradiation treatment with an energy of ions, which allows for complete penetration through the polymer foil, however, no or no sufficient UV activation is applied for a complete pore development and/or an oxygen concentration is adjusted to avoid development of completely penetrating pores.

13. Method according to claim 11, wherein the irradiation by heavy ions is performed by applying an irradiation treatment with an energy of ions of lower energy which allows only incomplete penetration through the polymer foil, with optional UV-treatment afterwards and with subsequent partial etching to produce indentations on one side of the membrane.

14. Method according to anyone of claims 11 to 13, in which for providing a membrane having indentations only on one side of the membrane, the etching treatment is applied only on one side of the membrane or a protective layer is provided on one side of the membrane preventing etching on this side.

15. Use of a gas-tight membrane according to anyone of claims 1 to 10 or produced according to the method of anyone of claims 11 to 14 as a burst membrane, especially for emergency venting in connection with batteries, e.g. for cars, e-bikes, handheld devices, energy storing devices or heavy-duty tools.
